(19) **Europäisches Patentamt**

**European Patent Office**

**Office européen des brevets**

(11) **EP 1 684 144 A1**

(12) **DEMANDE DE BREVET EUROPEEN**

(43) Date de publication:
**26.07.2006 Bulletin 2006/30**

(51) Int Cl.:
***G05D 1/06*** (2006.01)

(21) Numéro de dépôt: **06290108.7**

(22) Date de dépôt: **17.01.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **19.01.2005 US 644533**
**21.01.2005 FR 0500665**
**01.08.2005 FR 0508212**

(71) Demandeur: **AIRBUS France**
**31060 Toulouse (FR)**

(72) Inventeurs:
• **Ferro, Daniel**
**31600 Muret (FR)**
• **Van Boven, Machiel**
**31400 Toulouse (FR)**

(74) Mandataire: **Bonnans, Arnaud**
**Santarelli**
**14, avenue de la Grande Armée**
**75017 Paris Cedex 17 (FR)**

(54) **Système de navigation pour aéronef et procédé de commande associé**

(57) L'invention concerne un système de navigation d'un aéronef, comprenant :

- des moyens pour calculer une trajectoire de vol estimée (12) pour l'aéronef ;
- des moyens pour déterminer une valeur estimée d'un paramètre de vol correspondant à une vitesse estimée pour la sortie d'une partie au moins des dispositifs hypersustentateurs de l'aéronef ;
- des moyens pour afficher une indication (18,20) relative à ladite valeur estimée.

Un procédé de commande d'un tel système et un aéronef ainsi équipé sont également proposés.

Fig.6

## EP 1 684 144 A1

**Description**

L'invention concerne un système de navigation pour aéronef et un procédé de commande associé.

La phase d'approche précédant l'atterrissage d'un aéronef comprend classiquement deux étapes principales : une descente effectuée à vitesse sensiblement constante d'une altitude de croisière à une altitude intermédiaire (en général 3000 pieds, soit environ 1000 m) et une décélération en conservant sensiblement cette altitude intermédiaire. Après ces deux étapes principales, on intercepte l'alignement de descente correspondant à l'aéroport, et précisément à la piste d'atterrissage.

Lors de la décélération, le pilote fait évoluer successivement des dispositifs hypersustentateurs d'une position entièrement rentrée à une position entièrement sortie en passant par des positions intermédiaires. La sortie progressive des dispositifs hypersustentateurs permet en effet d'augmenter la portance de l'aéronef et ainsi de permettre un vol stable à des vitesses chaque fois inférieures.

Lorsque l'approche est réalisée selon le schéma classique rappelé ci-dessus, l'essentiel de la décélération s'effectue à altitude constante et le moment opportun de sortie de chaque partie des dispositifs hypersustentateurs est donc relativement facile à déterminer pour un pilote entraîné, par l'observation du seul paramètre qui évolue sensiblement, à savoir la vitesse, en la comparant aux vitesses limites (minimale et maximale) de vol avec la configuration courante.

Le procédé d'approche classique peut en revanche se révéler gênant sur le plan des nuisances sonores engendrées au sol du fait de l'évolution à l'altitude intermédiaire relativement basse de l'aéronef sur une partie notable de sa trajectoire.

Il a de ce fait été proposé de pratiquer une approche en descente continue (ou CDA de l'anglais *"Continuous Descent Approach"*), selon laquelle le palier de décélération à altitude constante est supprimé de sorte que les deux étapes principales de la méthode classique rappelées ci-dessus sont remplacées par une seule étape pendant laquelle l'aéronef descend et décélère simultanément, cette étape étant éventuellement décomposée en plusieurs sections ayant chacune des pentes de descente spécifiques.

On comprend dès lors que, la vitesse et l'altitude variant simultanément et pouvant de plus être liées l'une à l'autre d'une manière propre à chaque approche (dont les caractéristiques principales sont déterminées par le système de gestion de vol), il devient difficile, même pour un pilote expérimenté, de déterminer par la seule observation des paramètres de vol effectifs le moment opportun pour la sortie des différentes configurations des dispositifs hypersustentateurs.

En vue notamment de résoudre ce problème, l'invention propose un système de navigation d'un aéronef, comprenant des moyens pour calculer une trajectoire de vol estimée pour l'aéronef, des moyens pour déterminer une valeur estimée d'un paramètre de vol correspondant à une vitesse estimée pour la sortie d'une partie au moins des dispositifs hypersustentateurs de l'aéronef et des moyens pour afficher une indication relative à ladite valeur estimée.

Une indication relative à la sortie de la partie des dispositifs hypersustentateurs concernée est ainsi disponible pour le pilote, ce qui allège l'attention nécessitée par cette fonction, même lorsque la trajectoire d'approche est relativement complexe.

Le paramètre de vol est par exemple l'altitude de l'aéronef. L'altitude est en effet un paramètre fréquemment contrôlé et facilement accessible par le pilote.

La partie concernée des dispositifs hypersustentateurs est par exemple celle qui provoque le passage à la première position intermédiaire, pour lequel on a déterminé que l'altitude était un paramètre intéressant.

Le paramètre de vol peut être la vitesse de l'aéronef, qui reprend les avantages précédemment évoqués. Ce paramètre est notamment intéressant pour contrôler le passage de la première position intermédiaire à la seconde position intermédiaire.

L'indication mentionnée ci-dessus est par exemple un message affiché lorsque la vitesse effective de l'appareil devient inférieure à ladite valeur estimée.

L'indication peut également être un symbole affiché au niveau de la valeur estimée sur une échelle du paramètre concerné affichée sur un écran de visualisation.

Ce type de solution permet une bonne anticipation du moment opportun pour la sortie des dispositifs hypersustentateurs par le pilote.

L'indication peut aussi être une représentation numérique de la valeur estimée.

Le paramètre de vol peut selon un autre mode de réalisation être la position de l'aéronef en projection dans le plan horizontal. L'indication peut ainsi être un symbole disposé à une position représentative de ladite valeur estimée sur un plan de vol affiché sur un écran de visualisation, ce qui représente également une solution avantageuse en termes d'anticipation par le pilote du moment de changement de configuration des dispositifs hypersustentateurs.

L'indication affichée peut être fonction de la partie des dispositifs hypersustentateurs concernée, ce qui facilite au pilote la compréhension des actions à mener.

La vitesse estimée pour la sortie de la partie concernée des dispositifs hypersustentateurs est par exemple fonction d'une vitesse limite pour la stabilité avant cette sortie, par exemple par multiplication de cette vitesse limite par un coefficient compris entre 1,01 et 1,1 ou par addition d'une marge comprise entre 1 kt et 10 kt. La vitesse estimée pour la sortie de la partie concernée des dispositifs hypersustentateurs peut ainsi être facilement déterminée.

Le système de navigation peut en outre comprendre des moyens pour effectuer de manière automatique cette sortie de la partie concernée des dispositifs hypersustentateurs lorsque la valeur effective du paramètre de vol atteint la valeur estimée. Dans ce cas, le pilote n'a plus qu'à contrôler le bon fonctionnement de la sortie des différentes configurations.

Les moyens pour calculer une trajectoire de vol estimée déterminent par exemple une trajectoire de vol verticale à partir d'une trajectoire latérale donnée. Dans ce cas, la trajectoire de vol verticale peut comprendre au moins deux segments joints avec des pentes de descente associées et ladite valeur estimée peut correspondre à la valeur du paramètre à la jonction des deux segments.

L'invention propose également un procédé de commande d'un système de navigation pour aéronef, comprenant les étapes suivantes :

- calcul d'une trajectoire de vol estimée pour l'aéronef ;
- détermination d'une valeur estimée d'un paramètre de vol correspondant à une vitesse estimée pour la sortie d'une partie au moins des dispositifs hypersustentateurs de l'aéronef ;
- affichage d'une indication relative à ladite valeur estimée.

Un tel procédé peut présenter les caractéristiques optionnelles du système de navigation proposé ci-dessus et les avantages qui en découlent.

L'invention propose également un aéronef avec un tel système de navigation.

Des détails et avantages de la présente invention ressortiront mieux de la description qui suit, faite en référence aux dessins schématiques annexés, sur lesquels :

- la figure 1 est un diagramme représentant l'altitude d'un aéronef en fonction de la distance le séparant de son point d'atterrissage pour des procédures d'atterrissage de l'art antérieur,
- la figure 2A est un diagramme correspondant au diagramme de la figure 1 pour une procédure d'atterrissage selon l'invention,
- La figure 2B est un diagramme illustrant une variante de la procédure d'atterrissage de la figure 2A,
- la figure 3 montre un exemple de profil d'atterrissage selon l'invention indiquant la vitesse et l'altitude de l'aéronef en fonction de la distance le séparant de la piste d'atterrissage,
- la figure 4 illustre pour un modèle d'aéronef donné le gain en termes de bruit obtenu grâce au procédé d'atterrissage optimisé selon l'invention,
- la figure 5 représente les éléments principaux d'un système de navigation et de guidage adapté à mettre en oeuvre l'invention,
- la figure 6 représente un écran de navigation avant le début d'une approche en descente continue,
- la figure 7 représente un écran de visualisation de paramètres primaires de vol avant la sortie des dispositifs hypersustentateurs,
- la figure 8 représente l'écran de la figure 7 après sortie d'une première partie des dispositifs hypersustentateurs et avant sortie d'une seconde partie des dispositifs hypersustentateurs,
- la figure 9 représente un écran de contrôle de la fonction d'approche en descente continue avant activation de celle-ci, et
- la figure 10 représente l'écran de la figure 9 après activation du mode d'approche en descente continue.

Sur la première figure, la procédure d'atterrissage servant de référence est illustrée. Cette procédure est celle prévue classiquement dans un système de gestion de vol d'un aéronef (ou FMS pour "Flight Management System").

Dans l'exemple choisi, on suppose que l'aéronef est initialement en vol de croisière à une vitesse donnée et une altitude de 7000 pieds (soit 2133,6 m). (Dans la description des trajectoires qui suit, les valeurs d'altitudes données sont à considérer par rapport au terrain - une telle altitude par rapport au terrain étant parfois dénommées *"hauteur"*.) Lorsque cet aéronef veut rejoindre un aéroport, il amorce une première phase de descente dans laquelle, à vitesse constante, il passe d'une altitude de 7000 à 3000 pieds. Une fois arrivé à cette altitude intermédiaire de 3000 pieds, l'aéronef décélère puis sort progressivement ses becs et volets dans une première position intermédiaire (les volets restent généralement ici en position rentrée) tout en poursuivant sa phase de décélération. Sur les figures, le passage de la configuration où la voilure de l'aéronef est entièrement lisse à la configuration dans laquelle les becs et volets passent dans une première position intermédiaire est indiqué par la référence CONF1. Au cours de cette phase de décélération, la vitesse de l'aéronef diminue jusqu'à descendre en dessous d'une vitesse limite appelée S dans laquelle les becs et volets de l'aéronef passent de leur première position intermédiaire à une seconde position intermédiaire.

L'aéronef intercepte alors l'alignement de descente correspondant à l'aéroport d'arrivée. Au cours de cette dernière phase de vol, les becs et volets de l'aéronef prennent une troisième position de sortie (CONF3) et éventuellement une quatrième position appelée aussi configuration finale de sortie des becs et volets ou CONF FINALE. Cette position finale ainsi que la vitesse d'atterrissage doivent être atteintes au plus tard lorsque l'aéronef se trouve à une altitude de 1000 pieds.

L'angle de trajectoire de vol lors de la première phase de descente (de 7000 à 3000 pieds) est par exemple compris entre -2° et -2,5°. Dans la phase finale d'atterrissage, c'est-à-dire au cours de l'alignement de descente, cet angle de trajectoire de vol est par exemple de -3°.

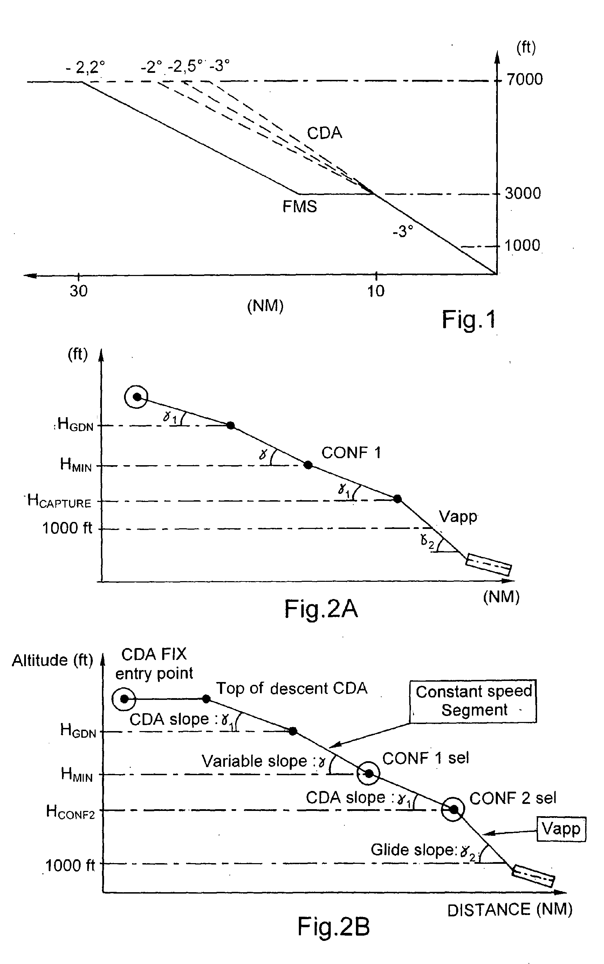

Un autre procédé d'atterrissage est connu sous le nom de CDA (pour *"Continuous Descent Approach"* soit en français approche de descente continue). Dans une telle approche, les phases de descente à vitesse constante et de décélération à altitude constante sont regroupées dans une même phase de descente avec décélération. Il n'y a pas pour cette approche CDA de palier à altitude constante. L'aéronef descend tout d'abord de son altitude de croisière (par exemple 7000 pieds) à une altitude d'environ 3000 pieds avec un angle de trajectoire de vol compris par exemple entre -2° et -3°. La figure 1 illustre en pointillés un angle de trajectoire de vol de -2°, un autre de -2,5° et un troisième de -3°. Dans cette approche, l'aéronef passe de sa configuration dans laquelle il présente une surface extérieure lisse (CONF0) à sa première configuration de sortie des becs et volets (CONF1) lorsqu'il atteint une vitesse appelée GD (pour *"Green Dot"* ou en français point vert). Cette vitesse limite est utilisée tant lors d'une phase d'atterrissage d'un aéronef que lors d'une phase de décollage. Le passage de la première position intermédiaire des becs et volets de l'aéronef à la seconde position intermédiaire des becs et volets de l'aéronef s'effectue lorsque l'aéronef atteint la vitesse S. Ce passage est référencé sur les dessins par CONF2.

Généralement, tant pour une procédure d'atterrissage classique telle celle enregistrée dans un système de gestion de vol d'un aéronef que pour une procédure d'approche CDA, le train d'atterrissage de l'aéronef est sorti lors du passage de la première position intermédiaire des becs et volets à la seconde position intermédiaire des becs et volets ou peu après ce passage.

Il a été remarqué que le fait d'utiliser le procédé CDA de base pour atterrir plutôt que d'utiliser le procédé programmé dans le système de gestion de vol était favorable notamment pour des avions long courrier et était quasiment sans impact pour des avions plus petits.

Un tableau ci-après résume une approche de type CDA de base :

| Altitude (en pieds) | Evénement |
|---|---|
| 7000 pieds | Point de départ : moteur au ralenti, surface extérieure lisse (CONF0) trains d'atterrissages rentrés |
| 7000 - 3000 pieds | Angle de trajectoire de vol : entre -2° et -3° (de préférence entre -2° et -2,5°) Poussée au ralenti GD → CONF1 Vitesse S → CONF2 |
| Environ 3000 pieds | Interception de l'alignement de descente |
| En dessous de 3000 pieds | Si CONF2 → sortie des trains d'atterrissage Vitesse F → CONF3 Vitesse F → CONF FINALE Décélération à Vapp |
| Après avoir atteint Vapp, soit au-dessus de 1000 pieds | Descente à vitesse constante Angle de trajectoire de vol -3° Atterrissage |

Le diagramme de la figure 2A illustre une procédure d'atterrissage CDA optimisée. Cette procédure comporte plusieurs étapes décrites ci-après.

On suppose ici que l'aéronef part par exemple également d'une altitude de l'ordre de 7000 pieds. Lors d'une première phase, l'aéronef entame sa descente avec un angle de trajectoire de vol $\gamma_1$. Au cours de cette première phase, l'aéronef décélère jusqu'à une vitesse GDN inférieure à la vitesse GD mentionnée plus haut mais en restant dans sa configuration lisse (CONFO). A la fin de cette première phase de descente, l'aéronef arrive à une altitude $H_{GDN}$, avec une vitesse GDN (< GD).

Il entame alors une seconde phase de descente avec un angle de trajectoire de vol de $\gamma$ variable, c'est-à-dire non imposé. En valeur absolue $\gamma$ est généralement supérieur à $\gamma_1$. Au cours de cette seconde phase de descente, la vitesse de l'aéronef est sensiblement constante (du fait que la consigne de vitesse vaut GDN) et l'aéronef descend jusqu'à une altitude $H_{MIN}$. A l'issue de cette seconde phase de descente, les becs et volets de l'aéronef passent dans la première configuration intermédiaire CONF1 : ceci correspond par exemple à la sortie uniquement des becs de l'aéronef avec un premier angle de braquage.

La troisième phase de descente est une phase de décélération. L'angle de trajectoire de vol est par exemple à nouveau $\gamma_1$. L'aéronef passe alors d'une altitude $H_{MIN}$ à une altitude $H_{CAPTURE}$. A cet instant, l'aéronef atteint l'axe final d'approche lequel peut être de type ILS, MLS, GBAS ou SBAS ; dans l'hypothèse d'une interception de l'axe ILS, l'aéronef reçoit le signal ILS (pour "Instrument Landing System" ou système d'atterrissage aux instruments).

Il entame alors la dernière phase de la procédure d'atterrissage qui est imposée pour chaque aéroport. Au cours de cette dernière phase, la vitesse de l'aéronef décroît jusqu'à Vapp et l'angle de trajectoire de vol est par exemple $\gamma 2$. Au plus tard lorsqu'il atteint une altitude de 1000 pieds, l'aéronef est dans sa configuration finale d'atterrissage.

A titre d'exemple numérique, on peut avoir $\gamma_1$ = -2° ou -2,2° tandis que y = -2,5°. Généralement, $\gamma_2$ = -3°.

Le tableau ci-après récapitule les différentes données d'une procédure d'atterrissage optimisée selon l'invention :

| Altitude | Evénement pour approche optimisée |
|---|---|
| 7000 pieds | CONFO : configuration lisse Poussée au ralenti Vitesse < vitesse de croisière |
| 7000 pieds | Angle de trajectoire de vol : entre -2° ou -2,5° (ou 0°) Poussée réduite Décélération à la vitesse GDN |
| $H_{GDN}$ | Maintien la vitesse constante, angle de trajectoire de vol variable Descente à une altitude $H_{MIN} \rightarrow$ CONF1 |
| $H_{MIN}$ | Nouvel angle de trajectoire de vol : -2° ou -2,5° Décélération à SN$\rightarrow$ CONF2 |
| Environ 3000 pieds | Interception de l'axe de descente |
| Inférieur à 3000 pieds | Vitesse F $\rightarrow$ CONF3 Si CONF3 $\rightarrow$ sortie des trains d'atterrissage Vitesse F$\rightarrow$ CONF FINALE Décélération à Vapp |
| Après atteinte de la vitesse Vapp, soit au -dessus de 1000 pieds | Descente à vitesse constante Poussée adaptée à un angle de trajectoire de vol de -3° Procédure finale d'atterrissage |

Dans ce tableau, on a introduit une vitesse GDN et une vitesse SN. On a les égalités suivantes :

$$GDN = GD - \Delta 1$$

$$SN = S - \Delta 2$$

Les valeurs de $\Delta 1$ et $\Delta 2$ dépendent notamment de l'aéronef. On a en effet remarqué que pour chaque aéronef il était possible de faire passer les becs et volets dans leur première configuration intermédiaire, respectivement dans leur seconde configuration intermédiaire, à des vitesses respectivement inférieures aux vitesses GD et S habituellement préconisées.

L'altitude $H_{GDN}$ est déterminée à partir de l'altitude du point initial (dans l'exemple choisi 7000 pieds) et de la longueur de décélération nécessaire pour passer de la vitesse au point initial à la vitesse GDN en maintenant un angle de trajectoire de vol prédéterminé.

L'altitude $H_{MIN}$ est une altitude minimale donnée pour un poids d'aéronef afin d'assurer la stabilisation de celui-ci au-dessus ou à une altitude de 1000 pieds au-dessus de la piste d'atterrissage.

Les vitesses GDN et SN ne remplacent pas les vitesses GD et S indiquées précédemment. Il s'agit de vitesses complémentaires qui peuvent être indiquées aux pilotes sur un écran de visualisation comme vitesses alternatives permettant d'obtenir une réduction des bruits (ou vitesses de base pour les procédures de réduction de bruit). Ces vitesses sont alors utilisées uniquement dans les cas où la sécurité et la manoeuvrabilité de l'aéronef ne sont pas détériorées. Ces vitesses (GDN et SN ou bien les valeurs $\Delta 1$ et $\Delta 2$) sont déterminées en fonction du type d'aéronef ainsi que de la masse de l'aéronef.

On remarque que la vitesse SN peut être atteinte en dessous de 3000 pieds mais toujours bien entendu au-dessus de 1000 pieds.

La procédure d'approche optimisée peut être programmée dans le système de gestion de vol (FMS) de l'aéronef. Les différents paramètres sont calculés à rebours depuis la piste d'atterrissage.

Dans une première étape on considère tout d'abord que la phase d'alignement de descente *("Glide Slope"* en anglais) est respectée. Ce segment géométrique est parcouru avec une vitesse Vapp depuis la piste d'atterrissage jusqu'à une altitude de 1000 pieds au dessus de celle-ci à une pente $\gamma_2$ qui est classiquement de -3°, ou toute autre pente indiquée par la procédure agréée avec le contrôleur du trafic aérien. Au-delà de 1000 pieds, on considère que les moteurs sont proches du ralenti et on détermine la vitesse au point d'intersection de l'alignement de descente (par exemple 3000 pieds ou bien $H_{CAPTURE}$). On tient compte ici éventuellement du passage de la première position intermédiaire des becs et volets dans leur seconde position intermédiaire. Il faut considérer ici que ce passage se fait à une vitesse inférieure à SN (et non pas S) afin de tenir compte du temps de déploiement des becs et volets.

Toujours en calculant à rebours, à partir de l'altitude de capture de l'alignement de descente et de la vitesse de l'aéronef à cet endroit, on détermine l'altitude $H_{MIN}$ dans laquelle l'aéronef vole à une vitesse GDN et passe de la configuration extérieure lisse (becs et volets rentrés) à la position dans laquelle les becs (et volets) sont dans leur première position intermédiaire.

On considère que ce segment est parcouru avec un angle de trajectoire de vol $\gamma_1$ constant compris par exemple entre -2° et -2,5°. Cet angle de trajectoire de vol est choisi à la fois aussi élevé que possible en valeur absolue pour éloigner le plus possible la trajectoire de survol et suffisamment faible pour permettre une décélération optimale (suffisamment forte pour ne pas allonger inconsidérément la trajectoire de vol) jusqu'à la vitesse GDN et peut dépendre par exemple du poids et du type de l'aéronef.

Dans une troisième étape de calcul on considère que l'aéronef monte, à une vitesse constante correspondant à la vitesse GDN, à une l'altitude $H_{GDN}$. On considère ici, lors du passage de l'altitude $H_{MIN}$ à l'altitude $H_{GDN}$ que les moteurs sont proches du ralenti, avec une marge de poussée lors de la conception du profil permettant d'absorber, lors de l'approche effective, des imprécisions liées à la connaissance de la masse de l'avion, à celle du modèle de vent utilisé par le FMS, à celle des calculs et à celle du guidage effectif. L'angle de trajectoire de vol est par exemple de -3°.

Le calcul du dernier segment (qui correspond à la première phase de décélération) n'est pas calculé à rebours mais à partir du point où l'aéronef entame sa descente. L'aéronef partant de ce point décélère, éventuellement à altitude constante (c'est donc alors l'altitude $H_{GDN}$) pour passer de sa vitesse de croisière à la vitesse GDN. La trajectoire de l'aéronef est alors déterminée en faisant l'intersection de ces deux derniers segments calculés.

Une variante de procédure d'atterrissage CDA optimisée est représentée à la figure 2B. Les parties de trajectoire communes aux figures 2A et 2B, ainsi que les étapes de calcul correspondantes (trois premières étapes ci-dessus), ne seront pas décrites à nouveau.

Selon cette variante, dans une quatrième étape de calcul, on considère pour définir le profil que l'avion monte à la pente $\gamma_1$ définie précédemment, en accélérant, jusqu'à rejoindre l'altitude programmée du début du CDA à une vitesse inférieure à celle de fin de descente.

Au cours du cinquième et dernier segment prévu dans ce mode de réalisation, l'avion accélère en palier jusqu'à atteindre la vitesse de fin de descente, puis continue à vitesse constante jusqu'au point où l'aéronef entame sa procédure de CDA optimisée, dit *"CDA Fix Entry point".* La vitesse de fin de descente sus-mentionnée est contrôlée directement ou indirectement par l'équipage, soit dictée par l'équipage, soit par le système de gestion de vol (FMS), résultant des optimisations classiques effectuées par ce dernier, par exemple en satisfaisant un critère durée de vol / consommation de carburant, ou en satisfaisant une heure d'arrivée imposée, par exemple au point *"CDA Fix Entry Point".*

Il n'est pas question de supprimer des valeurs telles GD et S par exemple de la mémoire du système de gestion de vol de l'aéronef. Il convient ici de rajouter des valeurs GDN et SN dans cette mémoire. En effet, d'une part les valeurs GD et S sont utilisées non seulement à l'atterrissage mais également en phase de décollage et d'autre part dans certaines conditions de vol, il est peut-être nécessaire, pour des raisons de sécurité et/ou de confort de sortir les becs à la vitesse GD et les volets à la vitesse S (et non pas GDN et SN).

Pour le passage à une configuration donnée, correspondant à une position intermédiaire de sortie des becs et volets, il existe une vitesse de passage préconisée ainsi qu'une vitesse VLS (pour "Vitesse Limite de Sélection") en dessous de laquelle le passage à la configuration considérée ne doit pas être réalisé (notamment pour des raisons de sécurité de vol). Ces plages de vitesse dépendent du type de l'aéronef ainsi que de sa masse.

A titre d'exemple, supposons que pour un aéronef d'une masse de 180 tonnes la vitesse classique GD recommandée pour sortir les becs (passage à CONF1) soit de 230 kt (1 kt = 1,852 km/h). La vitesse minimale de passage à la première position intermédiaire des becs et volets (CONF1) est par exemple VLS1 = 195 kt. La longueur de l'intervalle de vitesse dans lequel le passage à CONF1 est possible est de 35 kt. Pour limiter les nuisances sonores au sol, il convient de choisir une vitesse GDN la plus proche possible de VLS1. Toutefois, pour des raisons de sécurité, une marge doit être conservée. Dans un tel cas, on pourra choisir GDN = 205 kt (soit GDN=VLS1+10 kt). On a alors, par rapport à des équations définies plus haut, $\Delta 1 = 25$ kt.

Pour ce même avion, la vitesse S correspondant à la sortie des volets et donc le passage à la seconde position intermédiaire des becs et volets (CONF2) est par exemple de 186 kt. La vitesse minimale pour passer à CONF2 est par exemple VLS2 = 161 kt. On choisi ici par exemple SN = 166 kt.

Le système de gestion de vol proposé ici comporte de manière classique un clavier alphanumérique et un écran connus sous le nom de MCDU pour "Multi function Control and Display Unit" (soit en français dispositif de contrôle et d'affichage multifonctions). Durant les phases de décollage et d'atterrissage, la vitesse GD est affichée sur le MCDU. L'invention propose ici une forme de réalisation prévoyant que lors d'une phase d'atterrissage le MCDU affiche également la vitesse GDN permettant de réduire le bruit de l'aéronef en volant en position lisse.

Il est rappelé ici que la vitesse GD (ou Green Dot) est à l'origine la vitesse qui, lorsqu'un moteur est en panne, permet le meilleur taux de montée. Cette vitesse est également généralement utilisée comme vitesse finale de décollage. C'est également dans l'art antérieur la vitesse recommandée à partir de laquelle les becs d'un aéronef peuvent être sortis lors d'une approche d'un terrain d'atterrissage.

De même, la vitesse S sert tant au décollage qu'à l'atterrissage. Au décollage il s'agit de la vitesse au-dessus de laquelle la configuration extérieure de l'aéronef peut être entièrement lisse (passage à CONF0). Lors de l'atterrissage, il s'agit de la vitesse classique pour la sortie des volets (c'est-à-dire passage à CONF2).

Il existe également des vitesses recommandées pour le passage à la troisième position intermédiaire des becs et volets (CONF3) ainsi que pour le passage à la configuration finale dans laquelle les becs et volets sont entièrement sortis. Ces vitesses sont utilisées uniquement lors de l'atterrissage. De même que la vitesse S, ces vitesses sont par exemple affichées sur le MCDU. Il est proposé ici d'afficher également la vitesse SN sur ce dispositif.

Il est rappelé ici que les trains d'atterrissages sont sortis de préférence après le passage à la troisième position intermédiaire des becs et volets, soit CONF3.

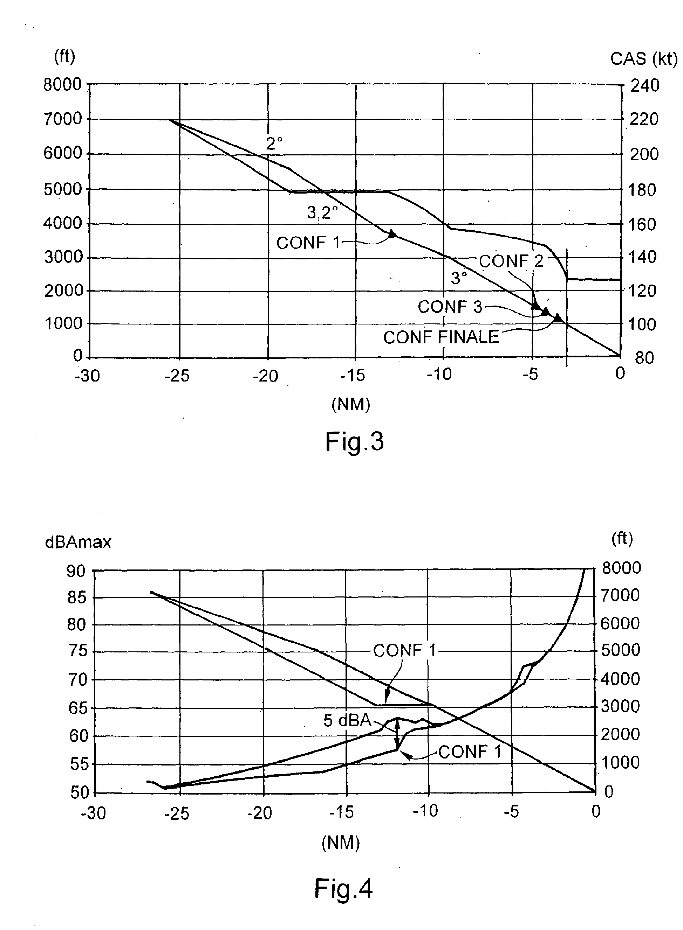

La procédure d'approche sur une piste d'atterrissage décrite ci-dessus permet de limiter sensiblement les bruits au sol à proximité de cette piste d'atterrissage. La figure 4 illustre le gain obtenu. Sur cette figure, on a représenté pour mémoire la trajectoire de l'aéronef, c'est-à-dire l'altitude de l'aéronef par rapport à la distance de la piste d'atterrissage et d'autre part le bruit au sol en fonction également de la distance de la piste d'atterrissage. De manière logique, les courbes concernant le bruit se chevauchent d'une part lorsque l'aéronef est en vol de croisière et d'autre part au moment de l'atterrissage puisque la procédure d'atterrissage n'influe pas sur le dernier segment de vol avant d'atteindre la piste d'atterrissage. L'alignement de descente de fin de vol (Glide Slope) n'est pas modifié lors d'une procédure d'atterrissage selon l'invention.

Le procédé selon l'invention permet également une réduction de la consommation de carburant de l'aéronef. En outre, la procédure d'atterrissage est légèrement plus rapide permettant un gain de temps.

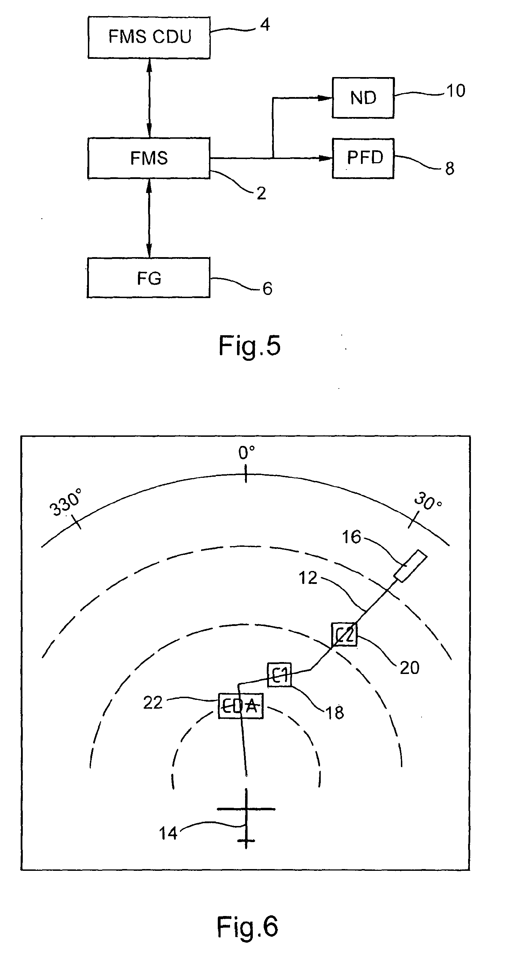

On a représenté à la figure 5 les éléments principaux d'un système de navigation apte à guider le système le long d'une procédure CDA optimisée et à donner au pilote des indications afin de déterminer (et même d'anticiper) les moments opportuns pour la sortie (manuelle ou automatique) des différentes configurations des dispositifs hypersustentateurs. Ces indications sont particulièrement intéressantes dans le cas d'une approche en descente continue (dont le cas qui vient d'être évoqué représente un exemple particulier), mais pourraient bien sûr être également utilisées lors d'une approche selon un procédé classique. Elles permettent dans ce cas également de faciliter pour l'équipage une mise en oeuvre de ses actions en cohérence avec la trajectoire estimée par le système de gestion de vol (FMS) 2.

Le système de gestion de vol (FMS) de l'aéronef est référencé 2 sur la figure 5. Il échange avec l'équipage des informations au travers du dispositif de contrôle et d'affichage (CDU, tel que par exemple le MCDU déjà mentionné) référencé 4 sur la figure 5.

Le système de gestion de vol (FMS) 2 reçoit également des informations d'un système de pilotage automatique 6 (ou FG de l'anglais "*Flight Guidance*"), telles que par exemple la vitesse effective de l'avion $V_{a/c}$ ou la vitesse maximale avec la configuration des dispositifs hypersustentateurs à venir (c'est-à-dire la prochaine configuration sortie) $V_{fe}$.

Le système de gestion de vol (FMS) 2 envoie quant à lui des informations à un écran de visualisation de paramètres primaires de vol 8 (ou PFD de l'anglais "*Primary Flight Display*") et à un écran de navigation 10 (ou ND de l'anglais "*Navigation Display*"), notamment celles décrites en détail plus loin.

Le système de gestion de vol (FMS) 2 calcule la trajectoire dans l'espace prévue pour le vol, notamment la trajectoire envisagée pour la descente telle que par exemple ici la trajectoire d'approche en descente continue optimisée décrite ci-dessus, et qui est utilisée pour guider le pilotage automatique par l'envoi d'informations au système de pilotage automatique 6. Il s'agit donc d'une trajectoire estimée que l'aéronef devrait suivre en l'absence d'incident et sur la base de laquelle il est possible de prédire l'évolution supposée de paramètres pendant les phases ultérieures du vol, telle que par exemple la vitesse estimé de l'appareil.

Il est donc notamment possible d'estimer en quel point (repéré par ses coordonnées en projection horizontale et par son altitude) de la trajectoire (ici de la descente) l'appareil devrait atteindre une valeur de vitesse donnée, en particulier pour les valeurs de vitesse proposées pour la sortie des différentes configurations des dispositifs hypersustentateurs.

Le système de gestion de vol 2 peut ainsi transmettre à l'écran de navigation 10 (ND) les positions "*WPT for CONF1*" et "*WPT for CONF2*" (en projection dans le plan horizontal) auxquelles la vitesse estimée de l'aéronef correspond respectivement à la vitesse conseillée de passage des dispositifs hypersustentateurs de la position entièrement rentrée CONF0 à la première position intermédiaire CONF1 et à la vitesse conseillée de passage des dispositifs hypersustentateurs de la première position intermédiaire CONF1 à la seconde position intermédiaire CONF2. Ces vitesses suggérées pour le passage à une nouvelle configuration sont légèrement supérieures à la vitesse limite pour la stabilité de l'appareil avec la configuration courante, comme expliqué plus en détail ci-dessous.

Selon l'approche en descente continue proposée plus haut, ces vitesses de passage (GDN, SN) correspondent à des changements de pente de la trajectoire prévue par le système de gestion de vol 2. De manière générale, ces vitesses estimées pour le changement de configuration peuvent intervenir à n'importe quel moment de la descente, sans qu'elles ne soient nécessairement accompagnées d'un changement de pente.

La figure 6 représente l'écran de navigation (ND) 10 avant le début d'une approche en descente continue.

L'écran de navigation 10 affiche notamment la projection dans le plan horizontal de la trajectoire estimée sous forme d'une ligne continue 12 placée entre une représentation de l'aéronef 14 et une représentation de la piste d'atterrissage 16.

L'écran de navigation 10 affiche en outre des symboles 18, 20 désignant les points auxquels il est prévu que l'appareil atteigne (du fait de sa décélération) les valeurs conseillées respectivement pour le passage à la première position intermédiaire et pour le passage à la seconde position intermédiaire des dispositifs hypersustentateurs.

Ces symboles 18, 20 sont positionnés sur la trajectoire (ligne continue 12) sur la base des informations *"WPT for CONF1"* et *"WPT for CONF2"* reçues du système de gestion de vol 2 comme déjà mentionné.

Ces symboles 18, 20 sont par exemple affichés dès que la trajectoire estimée de l'appareil pour son approche en descente continue est déterminée. Les symboles 18, 20 sont par ailleurs effacés lorsque la position correspondante a été dépassée ou que le mode d'approche en descente continue est désactivé.

On propose en outre sur la figure 6 d'afficher un symbole 22 représentatif de la position estimée sur la trajectoire à laquelle le système de gestion de vol 2 a prévu que doit commencer l'approche en descente continue.

Grâce à l'affichage des symboles 18, 20, 22 (qui représentent des prédictions de passage à ces trois nouveaux points caractéristiques), le pilote a une vue d'ensemble de l'approche et peut anticiper les moments auxquels il devra modifier la configuration des dispositifs hypersustentateurs.

Le système de gestion de vol 2 transmet à l'écran de visualisation de paramètres primaires de vol 8 (PFD) l'altitude estimée $H_{CONF1}$ à laquelle il est prévu (selon le schéma de descente calculé par le système de gestion de vol 2) que la vitesse atteigne la vitesse suggérée pour le passage des dispositifs hypersustentateurs à la première position intermédiaire CONF1 (soit dans l'exemple considéré ici $H_{CONF1}=H_{min}$). Le système de gestion de vol 2 transmet également à l'écran de visualisation de paramètres primaires de vol 8 une information sur la valeur $V_{CONF2}$ de la vitesse de vol qui correspond dans la même approche au passage des dispositifs hypersustentateurs à la seconde position intermédiaire (soit ici $V_{CONF2}=SN$).

Ces valeurs estimées d'altitude et de vitesse peuvent être déterminées par exemple comme suit, en utilisant ici les vitesses minimales VLS dans chaque configuration, utilisées et fournies par le système de pilotage automatique 6 :

- l'altitude $H_{CONF1}$ est l'altitude à laquelle le système de gestion de vol 2 prévoit une vitesse égale à la vitesse minimum utilisée VLS en position rentrée des dispositifs hypersustentateurs, plus cinq noeuds, ce qui peut s'écrire :

$$V_{estimée}(H_{CONF1})=VLS(lisse)+5 \text{ kt ;}$$

- la vitesse $V_{CONF2}$ est égale à la vitesse minimale VLS utilisée avec les dispositifs hypersustentateurs en première position intermédiaire, plus cinq noeuds, soit : $V_{CONF2}=VLS(CONF1)+5 \text{ kt.}$

En variante, la marge de cinq noeuds utilisée pourrait être remplacée (dans un cas ou l'autre, ou les deux) par la multiplication par un coefficient, par exemple 1,05. On aurait alors :

$$V_{estimée}(H_{CONF1})=VLS(lisse) \times 1,05$$

et

$$V_{CONF2}=VLS(CONF1) \times 1,05.$$

Les valeurs $H_{CONF1}$ et $V_{CONF2}$ sont déterminées par le système de gestion de vol 2 sur la base des informations de vitesse minimale utilisée VLS fournies par le système de pilotage automatique 6.

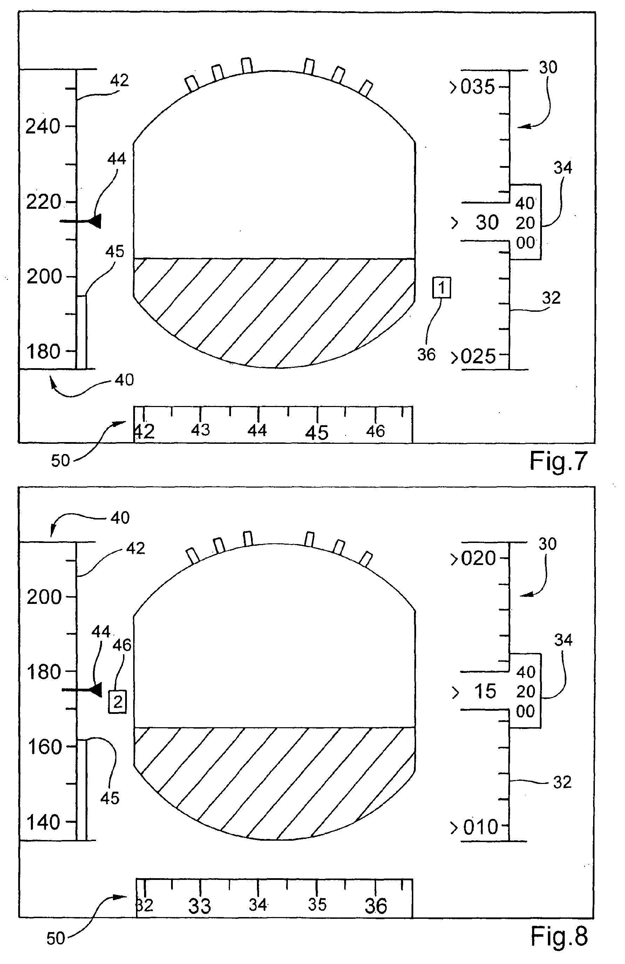

La figure 7 représente l'écran de visualisation de paramètres primaires de vol 8 à un instant du vol précédant le passage des dispositifs hypersustentateurs à la première position intermédiaire.

L'écran de visualisation des paramètres primaires comprend notamment un indicateur d'altitude 30, un indicateur de vitesse 40 et un indicateur d'orientation (dans le plan horizontal) 50.

L'indicateur d'altitude 30 comprend une échelle mobile 32 qui indique des valeurs de l'altitude autour de la valeur effective (ou valeur courante). L'indicateur d'altitude 30 comprend également un afficheur fixe 34 de l'altitude courante. (Il s'agit ici de manière générale de l'altitude par rapport à toute référence choisie, en général par rapport au niveau de la mer.)

Lors des variations d'altitude de l'appareil, l'échelle mobile 32 défile verticalement de sorte que l'afficheur fixe 34 est situé sur cette échelle au niveau de la valeur courante d'altitude (soit 3020 ft sur la figure 7).

Dans l'exemple représenté ici, l'échelle mobile 32 porte des indications en centaines de pieds alors que l'afficheur fixe 34 se lit par la combinaison des premiers chiffres (en centaines de pieds) et des chiffres de droite exprimant les dizaines et les unités de la valeur courante de l'altitude en pieds.

Un indicateur de l'altitude estimée $H_{CONF1}$ pour la sortie des dispositifs hypersustentateurs en première position intermédiaire est affiché dans l'échelle mobile 32 sous forme d'un symbole 36 au niveau de la région de l'échelle représentant l'altitude $H_{CONF1}$, à savoir 2800 ft dans l'exemple représenté. Le symbole 36 a par exemple une forme liée à la désignation de la première position intermédiaire des dispositifs hypersustentateurs : ici, le symbole 36 comprend un "1" pour rappeler la désignation *"CONF1"* correspondant à la première position intermédiaire des dispositifs hypersustentateurs.

Comme déjà mentionné, l'indicateur de l'altitude estimée $H_{CONF1}$ fait partie de l'échelle mobile 32 et est donc mobile avec celle-ci de sorte que lors de la descente, le symbole 36 suit le défilement vertical vers le haut de l'échelle 32 et se rapproche ainsi de l'altitude effective, ce qui permet au pilote de prévoir à l'avance le moment où sera atteinte l'altitude correspondant à la vitesse estimée pour le passage des dispositifs hypersustentateurs en première position intermédiaire.

Afin de ne pas surcharger l'affichage, on peut prévoir que le symbole 36 n'apparaisse que lorsque les conditions qui suivent sont réalisées : mode d'approche en descente continue CDA sélectionné, phase de descente active, position entièrement rentrée CONFO des dispositifs hypersustentateurs, vitesse de l'appareil inférieure à la vitesse maximale relative à la première position CONF1 des dispositifs hypersustentateurs ($V_{fe}$ donnée par le système de pilotage automatique 6 comme déjà indiqué), mode de navigation automatique du plan de vol engagé (en latéral).

Par ailleurs, pour améliorer encore l'anticipation des pilotes, on peut choisir d'indiquer la valeur numérique $H_{CONF1}$ à une extrémité de l'échelle d'altitude courante est trop importante pour que le symbole 36 puisse être affiché à l'intérieur de la partie d'échelle affichée.

L'indicateur de vitesse 40 comprend une échelle mobile 42 et un curseur fixe 44 (qui pointe sur une vitesse courante de 215 kt sur la figure 7). Ces éléments seront décrits en détail en référence à la figure 8. Il comprend également un indicateur 45 de la vitesse minimum utilisée VLS dans la configuration courante (ici 195 kt).

La figure 8 représente l'écran de visualisation des paramètres primaires après le passage de la première position intermédiaire CONF1 et avant le passage à la seconde position intermédiaire CONF2 des dispositifs hypersustentateurs.

Les éléments de la figure 8 ne seront pas décrits en détail à nouveau puisqu'ils correspondent pour l'essentiel à ceux de la figure 7 et portent les mêmes références.

On s'intéresse en particulier ici à l'indicateur de vitesse 40. Sur celui-ci, un indicateur de la vitesse $V_{CONF2}$ suggérée pour le passage des dispositifs hypersustentateurs à la seconde position intermédiaire CONF2 est affiché sous forme d'un symbole 46 solidaire de l'échelle mobile de vitesse 42, au niveau de la région de cette échelle correspondant à cette vitesse suggérée $V_{CONF2}$.

Comme pour l'indicateur d'altitude estimée pour le passage en position CONF1 en figure 7, ce symbole 46 est choisi avec une forme qui rappelle la désignation habituelle de la seconde position intermédiaire CONF2 : le symbole 46 indiquant la vitesse conseillée de passage en seconde position intermédiaire CONF2 est ici représenté sous forme d'un "2".

L'indicateur de vitesse 40 indique également la vitesse minimale utilisée VLS avec la configuration courante (ici la première position CONF1 des dispositifs hypersustentateurs, soit une vitesse VLS de 161 kt en reprenant l'exemple décrit plus haut).

Le symbole indicateur 46 de la vitesse $V_{CONF2}$ est affiché sur l'échelle mobile 42 à une position correspondant à la valeur $V_{CONF2}$ reçue du système de gestion de vol 2. Le symbole indicateur 46 est mobile de manière solidaire de l'échelle mobile 42. Lors de la décélération de l'appareil en phase d'approche, le pilote voit donc ce symbole 46 défiler verticalement vers le haut jusqu'à proximité du curseur fixe 44 ; à ce moment, il comprend qu'il lui est suggéré de déclencher le passage en seconde position intermédiaire CONF2 des dispositifs hypersustentateurs, ce qu'il a d'ailleurs pu anticiper du fait du défilement vertical susmentionné

Comme précédemment, afin de ne pas surcharger l'affichage, on peut prévoir que le symbole 46 ne soit affiché que lorsque toutes les conditions suivantes sont remplies : mode d'approche en descente continue CDA sélectionné, phase d'approche active, vitesse de l'appareil inférieure à la vitesse maximale relative à la seconde position intermédiaire CONF2 des dispositifs hypersustentateurs, seconde position intermédiaire des dispositifs hypersustentateurs CONF2 non encore sélectionnée, mode de navigation automatique du plan de vol latéral.

On peut remarquer que dans les deux cas précédents représentés respectivement aux figures 7 et 8, l'affichage des symboles 36, 46 permet d'indiquer au pilote la valeur estimée respectivement d'altitude $H_{CONF1}$ et de vitesse $V_{CONF2}$ pour la sortie d'une partie des dispositifs hypersustentateurs ; ces indicateurs ne visent pas toutefois à indiquer directement que l'altitude ou la vitesse sont effectivement atteintes par l'appareil. On peut pour ce faire prévoir en outre l'affichage d'un message spécifique à destination du pilote, par exemple dans l'écran de visualisation des paramètres primaires 8, lorsque ces valeurs sont effectivement atteintes par l'appareil et que le pilote n'a pas effectué la sélection de configuration becs/volets recommandée.

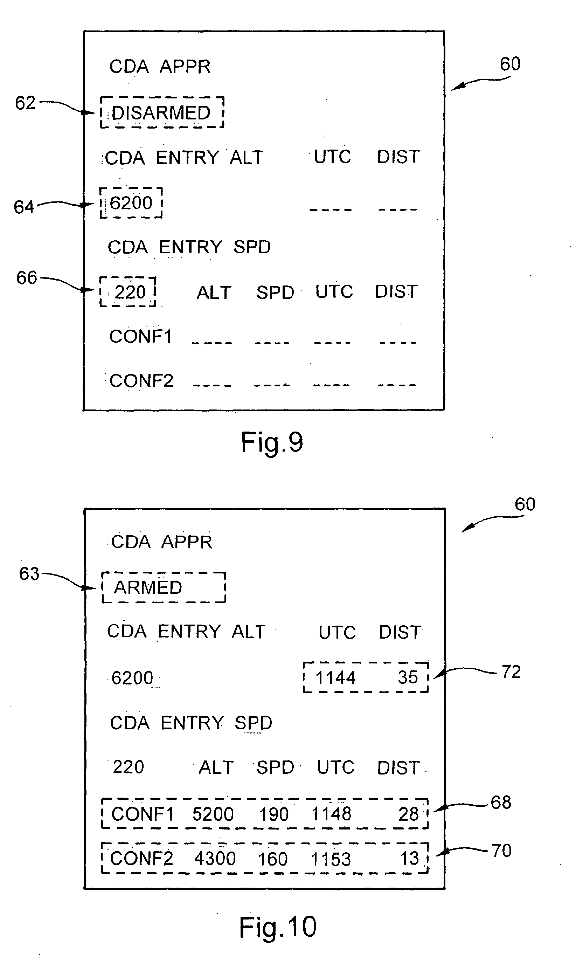

Les figures 9 et 10 représentent des exemples possibles d'écran de visualisation pour la gestion de l'approche en descente continue. Il s'agit par exemple d'un écran d'un dispositif de contrôle et d'affichage (CDU) déjà mentionné.

On notera par ailleurs que, si dans les exemples d'affichage précédents ont été reprises des valeurs utilisées dans l'exemple d'approche en descente continue optimisée décrit aux figures 2 à 4, les affichages présentés aux figures 9 et 10 se rapportent à un autre cas d'approche en descente continue et présentent par conséquent d'autres valeurs des paramètres de vol.

La figure 9 représente l'écran de visualisation 60 lorsque le mode d'approche en descente continue optimisée est désactivée, ce qui est indiqué par la mention *"DISARMED"* dans un indicateur du statut de l'approche en descente continue 62.

L'écran de visualisation 60 affiche alors seulement les valeurs d'altitude et de vitesse programmées pour le début de l'approche en descente continue, pour le cas où celle-ci soit enclenchée.

Ces valeurs d'altitude et de vitesse pour le début de l'approche en descente continue sont affichées respectivement dans une région 64 sous la mention *"CDA ENTRY ALT"* et dans une région 66 sous la mention *"CDA ENTRY SPD"*.

Les valeurs d'altitude et de vitesse pour le début de l'approche en descente continue sont par exemple connues par la base de données du système de gestion de vol (FMS) 2 et modifiables par l'équipage suivant les indications du contrôle du trafic aérien.

Comme déjà mentionné, l'écran de visualisation 60 se limite à l'affichage des valeurs qui viennent d'être mentionnées lorsque l'approche en descente continue est désactivée, et aucune valeur de paramètre de vol n'est donc indiquée pour le passage dans les différentes configurations des dispositifs hypersustentateurs.

La figure 10 représente l'écran de visualisation 60 après activation de l'approche en descente continue, ce qui est indiqué par l'affichage de la mention *"ARMED"* en référence 63, en lieu et place de la mention référencée précédemment 62.

Comme déjà indiqué, après activation de l'approche en descente continue, le système de gestion de vol 2 détermine la trajectoire verticale estimée pour cette approche. Il calcule en outre la valeur d'un certain nombre de paramètres qui correspondent au moment suggéré de passage à la première position intermédiaire CONF1, puis à la seconde position intermédiaire CONF2 des dispositifs hypersustentateurs. Ces valeurs des paramètres sont affichées sous forme numérique respectivement dans une région 68 pour la première position intermédiaire CONF1 et dans une région 70 pour la seconde position intermédiaire CONF2.

Dans l'exemple représenté à la figure 10, les paramètres de vol respectivement affichés sont de gauche à droite l'altitude, la vitesse, ainsi que l'heure de passage et la distance restante à parcourir pour rejoindre le point caractéristique considéré le long de la trajectoire latérale de plan de vol. On rappelle que ces valeurs des paramètres sont estimées par le système de gestion de vol 2 à partir de la trajectoire déterminée par ce même système pour effectuer l'approche en descente continue.

Il est proposé en outre, comme représenté à la figure 10, d'afficher l'heure d'entrée en phase de descente et la distance par rapport à l'arrivée au début de cette descente dans une région 72 de l'écran de visualisation 60.

Les points considérés ci-dessus (*"CDA Fix Entry Point"*, CONF1 et CONF2) sont également affichés dans la page de présentation des segments du plan de vol qui liste différents points de la trajectoire (et les caractéristiques qui s'y rattachent) tels qu'ils sont calculés par le système de gestion de vol.

Les exemples qui viennent d'être donnés ne constituent que des possibilités de mise en oeuvre de l'invention qui ne s'y limite pas.

**Revendications**

**1.** Système de navigation d'un aéronef, comprenant :

- des moyens (2) pour calculer une trajectoire de vol estimée pour l'aéronef ;
- des moyens (2) pour déterminer une valeur estimée d'un paramètre de vol correspondant à une vitesse estimée pour la sortie d'une partie au moins des dispositifs hypersustentateurs de l'aéronef ;
- des moyens (10 ; 8 ; 4) pour afficher une indication relative à ladite valeur estimée.

2. Système de navigation selon la revendication 1, **caractérisé en ce que** le paramètre de vol est l'altitude de l'aéronef.

3. Système de navigation selon la revendication 2, **caractérisé en ce que** ladite sortie d'une partie au moins des dispositifs hypersustentateurs correspond au passage de la position entièrement rentrée à la première position intermédiaire.

4. Système de navigation selon la revendication 1, **caractérisé en ce que** le paramètre de vol est la vitesse de l'aéronef.

5. Système de navigation selon la revendication 4, **caractérisé en ce que** ladite sortie d'une partie au moins des dispositifs hypersustentateurs correspond au passage de la première position intermédiaire à la seconde position intermédiaire.

6. Système de navigation selon l'une des revendications 4 ou 5, **caractérisé en ce que** l'indication est un message affiché pour une vitesse effective inférieure à ladite valeur estimée.

7. Système de navigation selon l'une des revendications 1 à 5, **caractérisé en ce que** ladite indication est un symbole (36 ; 46) affiché au niveau de ladite valeur estimée sur une échelle (32 ; 42) du paramètre affichée sur un écran de visualisation (8).

8. Système de navigation selon l'une des revendications 1 à 5, **caractérisé en ce que** ladite indication est une représentation numérique (68 ; 70) de ladite valeur estimée.

9. Système de navigation selon la revendication 1, **caractérisé en ce que** le paramètre de vol est la position de l'aéronef dans le plan horizontal.

10. Système de navigation selon la revendication 9, **caractérisé en ce que** l'indication est un symbole (18 ; 20) disposé à une position représentative de ladite valeur estimée sur un plan de vol (12) affiché sur un écran de visualisation (10).

11. Système de navigation selon l'une des revendications 1 à 10, **caractérisé en ce que** l'indication affichée (18 ; 20 ; 36 ; 46) est fonction de la partie des dispositifs hypersustentateurs concernée.

12. Système de navigation selon l'une des revendications 1 à 7, **caractérisé en ce que** ladite vitesse estimée est fonction d'une vitesse limite pour la stabilité avant ladite sortie d'une partie au moins des dispositifs hypersustentateurs.

13. Système de navigation selon la revendication 12, **caractérisé en ce que** la vitesse estimée est ladite vitesse limite multipliée par un coefficient compris entre 1,01 et 1,1.

14. Système de navigation selon la revendication 12, **caractérisé en ce que** la vitesse estimée est ladite vitesse limite plus une marge comprise entre 1 kt et 10 kt.

15. Système de navigation selon l'une des revendications 1 à 14, **caractérisé par** des moyens pour effectuer ladite sortie d'une partie au moins des dispositifs hypersustentateurs lorsque la valeur effective du paramètre de vol atteint ladite valeur estimée.

16. Système de navigation selon l'une des revendications 1 à 15, **caractérisé en ce que** les moyens pour calculer une trajectoire de vol estimée déterminent une trajectoire de vol verticale à partir d'une trajectoire latérale donnée.

17. Système de navigation selon la revendication 16, **caractérisé en ce que** la trajectoire de vol verticale comprend au moins deux segments joints avec des pentes de descente associées et **en ce que** ladite valeur estimée correspond à la valeur du paramètre à la jonction des deux segments.

18. Aéronef **caractérisé par** un système de navigation selon l'une des revendications 1 à 17.

**19.** Procédé de commande d'un système de navigation pour aéronef, **caractérisé par** les étapes suivantes :

- calcul d'une trajectoire de vol estimée pour l'aéronef ;
- détermination d'une valeur estimée d'un paramètre de vol correspondant à une vitesse estimée pour la sortie d'une partie au moins des dispositifs hypersustentateurs de l'aéronef ;
- affichage d'une indication relative à ladite valeur estimée.

**20.** Procédé de commande selon la revendication 19, **caractérisé en ce que** le paramètre de vol est l'altitude de l'aéronef.

**21.** Procédé de commande selon la revendication 20, **caractérisé en ce que** ladite sortie d'une partie au moins des dispositifs hypersustentateurs correspond au passage de la position entièrement rentrée à la première position intermédiaire..

**22.** Procédé de commande selon la revendication 19, **caractérisé en ce que** le paramètre de vol est la vitesse de l'aéronef.

**23.** Procédé de commande selon la revendication 22, **caractérisé en ce que** ladite sortie d'une partie au moins des dispositifs hypersustentateurs correspond au passage de la première position intermédiaire à la seconde position intermédiaire.

**24.** Procédé de commande selon la revendication 22 ou 23, **caractérisé en ce que** l'indication est un message affiché pour une vitesse effective inférieure à ladite valeur estimée.

**25.** Procédé de commande selon l'une des revendications 19 à 24, **caractérisé en ce que** ladite indication est un symbole (36 ; 46) affiché au niveau de ladite valeur estimée sur une échelle (32 ; 42) du paramètre affichée sur un écran de visualisation (8).

**26.** Procédé de commande selon l'une des revendications 19 à 22, **caractérisé en ce que** ladite indication est une représentation numérique (68 ; 70) de ladite valeur estimée.

**27.** Procédé de commande selon la revendication 19, **caractérisé en ce que** le paramètre de vol est la position de l'aéronef dans le plan horizontal.

**28.** Procédé de commande selon la revendication 27, **caractérisé en ce que** l'indication est un symbole (18 ; 20) disposé à une position représentative de ladite valeur estimée sur un plan de vol (12) affiché sur un écran de visualisation (10).

**29.** Procédé de commande selon l'une des revendications 19 à 28, **caractérisé par** une étape de sortie automatique des dispositifs hypersustentateurs concernés lorsque la valeur effective du paramètre de vol atteint ladite valeur estimée.

**30.** Procédé de commande selon l'une des revendications 19 à 29, **caractérisé en ce que** le calcul de la trajectoire de vol estimé comprend une étape de détermination d'une trajectoire de vol verticale à partir d'une trajectoire latérale donnée.

**31.** Aéronef **caractérisé en ce qu'**il comprend un dispositif susceptible de mettre en oeuvre un procédé selon l'une des revendications 19 à 30.

Fig.1

Fig.2A

Fig.2B

Fig.3

Fig.4

Fig.5

Fig.6

Fig.7

Fig.8

CDA APPR

62 — DISARMED

CDA ENTRY ALT      UTC    DIST

64 — 6200                    ----    ----

CDA ENTRY SPD

66 — 220     ALT   SPD   UTC   DIST

CONF1  ----   ----   ----   ----

CONF2  ----   ----   ----   ----

60

Fig.9

CDA APPR

63 — ARMED

CDA ENTRY ALT      UTC    DIST

6200                  1144      35  — 72

CDA ENTRY SPD

220     ALT   SPD   UTC   DIST

CONF1  5200   190   1148      28  — 68

CONF2  4300   160   1153      13  — 70

60

Fig.10

**Office européen des brevets**

**RAPPORT DE RECHERCHE EUROPEENNE**

Numéro de la demande

EP 06 29 0108

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 232 839 A (SICRE ET AL) 11 novembre 1980 (1980-11-11) * colonne 1, ligne 43 - colonne 2, ligne 10 * * colonne 6, ligne 63 - colonne 10, ligne 12 * * revendication 1; figures * ----- | 1-31 | G05D1/06 |
| Y | US 3 666 929 A (BRUCE E. MENN) 30 mai 1972 (1972-05-30) * colonne 3, ligne 11 - ligne 71 * * colonne 8, ligne 72 - colonne 9, ligne 39; figures 2,5 * ----- | 1-31 | |
| Y | US 3 690 598 A (HANS-DIETER BUCHHOLZ ET AL) 12 septembre 1972 (1972-09-12) * colonne 3, ligne 45 - colonne 5, ligne 42; revendication 1 * ----- | 1-31 | |
| Y | US 6 154 693 A (ABERSCHITZ ET AL) 28 novembre 2000 (2000-11-28) * colonne 4, ligne 58 - colonne 6, ligne 59; figures * ----- | 1-31 | DOMAINES TECHNIQUES RECHERCHES (IPC) B64C G05D |
| Y | WO 2004/053611 A (THALES; CHARLES, LOIC) 24 juin 2004 (2004-06-24) * page 1, ligne 8 - page 4, ligne 35; figures * ----- | 16,30 | |

Le présent rapport a été établi pour toutes les revendications

| Lieu de la recherche | Date d'achèvement de la recherche | Examinateur |
|---|---|---|
| Munich | 16 mars 2006 | Monica S. O. Navarro |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 29 0108

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-03-2006

| Document brevet cité au rapport de recherche | | Date de publication | Membre(s) de la famille de brevet(s) | | Date de publication |
|---|---|---|---|---|---|
| US 4232839 | A | 11-11-1980 | CA | 1126838 A1 | 29-06-1982 |
| | | | DE | 2751267 A1 | 18-05-1978 |
| | | | GB | 1595501 A | 12-08-1981 |
| | | | JP | 53091300 A | 10-08-1978 |
| US 3666929 | A | 30-05-1972 | AUCUN | | |
| US 3690598 | A | 12-09-1972 | DE | 1802243 A1 | 08-04-1971 |
| US 6154693 | A | 28-11-2000 | AU | 7503996 A | 05-06-1997 |
| | | | WO | 9718484 A1 | 22-05-1997 |
| | | | IL | 115977 A | 30-10-1998 |
| WO 2004053611 | A | 24-06-2004 | AU | 2003300250 A1 | 30-06-2004 |
| | | | CA | 2508287 A1 | 24-06-2004 |
| | | | EP | 1570325 A1 | 07-09-2005 |
| | | | FR | 2848306 A1 | 11-06-2004 |
| | | | US | 2006025898 A1 | 02-02-2006 |

EPO FORM P0460

Pour tout renseignement concernant cette annexe : voir Journal Officiel de l'Office européen des brevets, No.12/82